**Europäisches Patentamt**

**European Patent Office**

**Office européen des brevets**

(11) Veröffentlichungsnummer: **0 018 645**

**A1**

(12) **EUROPÄISCHE PATENTANMELDUNG**

(21) Anmeldenummer: **80102368.0**

(22) Anmeldetag: **02.05.80**

(51) Int. Cl.³: **G 11 B 15/29**

(30) Priorität: **07.05.79 DE 2918340**

(43) Veröffentlichungstag der Anmeldung:
**12.11.80 Patentblatt 80/23**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Schoettle, Klaus**
**Ladenburger Strasse 70**
**D-6900 Heidelberg(DE)**

(72) Erfinder: **Gliniorz, Lothar**
**Carl-Bosch-Ring 24**
**D-6710 Frankenthal(DE)**

(72) Erfinder: **Flohr, Joachim**
**Jaegerstrasse 1**
**D-6806 Viernheim(DE)**

(54) **Magnetbandlaufwerk nach dem Kontaktwickelprinzip.**

(57) Magnetbandlaufwerk nach dem Kontaktwickelprinzip mit in einem Rahmen drehbar gehaltenen Bandspulen (3) und Antriebsrolle (1) dazwischen, an deren ballig ausgeführte Umfangsfläche (4) die Bandspulen zu deren Antrieb andrückbar sind.

EP 0 018 645 A1

BASF Aktiengesellschaft                    O.Z. 0050/033844

## Magnetbandlaufwerk nach dem Kontaktwickelprinzip

Die Erfindung bezieht sich auf ein Magnetbandlaufwerk nach dem Kontaktwickelprinzip, bestehend aus einem Rahmen, darin drehbar gehaltenen Bandspulen zum Abgeben und Aufnehmen eines Magnetbandes und einer im wesentlichen dazwischen drehbar angeordneten Antriebsrolle für den gleichzeitigen Antrieb beider Bandspulen durch Kontaktdruck zwischen den Umfängen der Antriebsrolle und den Bandspulen, wobei die Welle der Antriebsrolle ortsfest und die Wellen der Bandspulen in Richtung der Antriebsrolle bewegbar sind, weiterhin bestehend aus Einrichtungen, die an den Kontaktstellen für den Andruck der Bandspulen an die Antriebsrolle und für eine Bandspannung des Bandabschnitts zwischen den Kontaktstellen sorgen.

Kontaktwickellaufwerke, die für Videobandgeräte ihren Einsatz finden, sind in verschiedenen Ausführungsformen bekannt, beispielsweise aus den US-Patentschriften 3 638 880, 3 093 284, 3 487 175 und aus der deutschen Offenlegungsschrift 24 36 008. Danach ist die Antriebsrolle gewöhnlich mit einem elastischen Belag versehen, an den die Bandspulen durch Federkraft ständig angedrückt werden. Um eine Bandspannung für den Bandabschnitt zwischen Kontaktstellen zu erzeugen, wird im US-Patent 3 093 284 vorgeschlagen, die Andruckkraft der aufnehmenden Bandspule zu erhöhen. Gemäß dem US-Patent 3 638 880 kann der Bandzug auch durch Anbringen einer Bremskraft an der abgebenden Bandspule erzielt werden. Der höhere Andruck verursacht auf der Aufwickelseite eine größere Radialverformung des elastischen Belages als auf der Abwickelseite. Wie beispielsweise im US-Patent 3 093 284 erläutert wird, führt die größere Verformung zu einem schnelleren Massefluß des elastischen Materials in der Andruckzone und damit zu einer höheren Umfangsgeschwindigkeit des elastischen Belages an dieser Stelle als auf der Abwickelseite, was ein Spannen des Bandabschnitts zwischen den Kontaktstellen zur Folge hat.

Im dynamischen Beharrungszustand des Laufwerkes genügen relativ geringe Andruckkräfte für den Bandtransport. Schwierigkeiten können jedoch beim Umsteuern der Antriebsrolle in die andere Laufrichtung auftreten, z.B. am Ende eines Banddurchlaufes. Um Störungen, insbesondere bei Videoaufzeichnungen, zu vermeiden, muß das Umsteuern nämlich in wenigen hundertstel Sekunden ablaufen. Für die abwickelnde Bandspule, die unmittelbar vor dem Umsteuern infolge ihres klein gewordenen Durchmessers mit ihrer höchsten Drehzahl rotiert, können dabei die Reibungskräfte an der Kontaktstelle für ein schlupffreies Abbremsen und wieder Beschleunigen in der Gegenrichtung zu gering sein, so daß sie unter Umständen noch in der alten Richtung weiterdreht, während die Antriebsrolle den Richtungswechsel bereits vollzogen hat. Da die aufwickelnde Bandspule, wie die Erfahrung zeigt, nicht im Maße der Abwickelseite "schlupft", entsteht dann eine endlose Bandschleife, die Störungen im Bandtransport und Bandbeschädigungen, zumindest aber Aufzeichnungsstörungen zur Folge haben kann.

Es ist schon vorgeschlagen worden, diesem Mangel durch Erhöhen der Andruckkraft während des Umsteuerns (US-Patent 3 487 175) oder durch Verstärken der Bremskraft während des dem Umsteuern vorausgehenden Abbremsvorganges an der abwickelnden Bandspule zu begegnen. Hierzu sind jedoch mechanisch und steuerungstechnisch aufwendige Maßnahmen notwendig. Darüberhinaus würden höhere Andruckkräfte einen größeren Verschleiß aller am Magnetbandantrieb beteiligten Teile und einen bei Batterie betriebenen Geräten ungewünscht höheren Energieverbrauch zur Folge haben.

Demgemäß besteht die Erfindungsaufgabe darin, die bekannten Kontaktwickellaufwerke so zu verbessern, daß bei extrem schnellem Richtungswechsel des Bandtransports ein störungsfreier Betrieb gewährleistet ist. Dabei soll die Forderung beachtet werden, daß der Verschleiß der am Bandtransport beteiligten Organe sowie die Energieaufnahme des Gerätes durch die, zu treffenden Maßnahmen zumindest nicht erhöht werden.

Die erfindungsgemäße Lösung besteht darin, daß die Umfangsfläche der Antriebsrolle ballig ausgeführt ist. Eine vorteilhafte Ausführungsform ist durch eine die Balligkeit beschreibende kreisbogenförmige Kontur gegeben. Der Radius des Kreisbogens liegt vorzugsweise zwischen 25 cm und 45 cm.

Durch die Balligkeit der Antriebsrolle ist bei geeigneter Abstimmung deren Geometrie, der Eigenschaften des elastischen Belags der Antriebsrolle und der Andruckkräfte aufeinander erreicht, daß die tangentialen Reibungskräfte an den Kontaktstellen zwischen der Antriebsrolle und den Bandspulen ohne Erhöhung der ursprünglichen Andruckkräfte der Bandspulen in der Bandmitte verstärkt sind und die Flächenpressung an den Bandkanten gerade zu Null wird.

Dadurch ist ein schlupffreier Richtungswechsel bei Schonung der Bandkanten möglich. Weiterhin ist als vorteilhaft anzusehen, daß dazu kein weiteres Laufwerkteil und kein zusätzlicher Energieaufwand für den Laufwerkbetrieb erforderlich sind. Für die Herstellung der neuen Antriebsrolle entstehen gegenüber den bisherigen Ausführungen praktisch keine zusätzlichen Kosten.

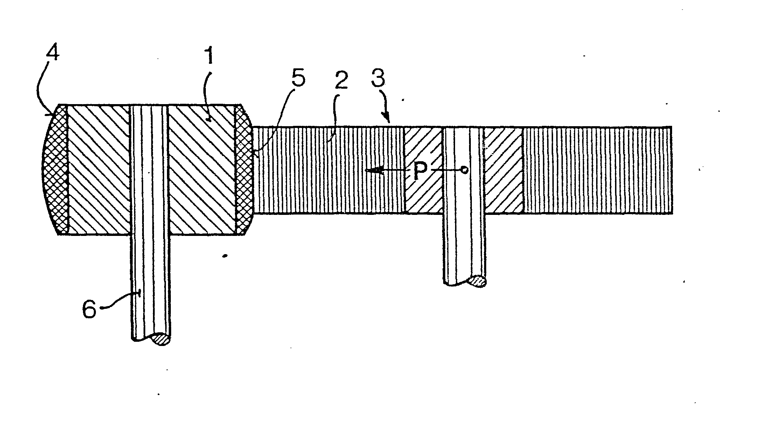

Die Erfindung ist nachfolgend anhand eines in der Zeichnung dargestellten Ausführungsbeispiels erläutert.

Kontaktwickellaufwerke sind beispielsweise aus den eingangs genannten Patentschriften bzw. -anmeldungen bekannt und daher hier nur noch einmal in ihrer prinzipiellen Funktion zum besseren Verständnis vorliegender Erfindung beschrieben. Die Zeichnung zeigt nur die Antriebsrolle, die für alle Arten der Kontaktwickellaufwerke eingesetzt werden kann, mit einer Bandspule in einer Seitenansicht; die zweite Bandspule ist der besseren Übersichtlichkeit wegen nicht dargestellt.

Zwei Wickelnaben sind in Halterungen drehbar gelagert, die zu einer von einem Motor rotierbaren und im wesentlichen zwischen ihnen angeordneten Antriebsrolle 1 geschwenkt oder verschoben werden können. Halterungen, Antriebsrolle und Motor sind von einem gemeinsamen Rahmen getragen. Ein Magnetband 2 ist von der einen Nabe zur anderen und umgekehrt spulbar, indem die beiden aus Nabe und Magnetband bestehenden Bandspulen 3 mittels Federn, die an den Halterungen angreifen, zur Antriebsrolle gezogen und an deren elastischen Belag angedrückt werden. Für magnetische Aufzeichnungen wird das Magnetband zwischen den beiden Kontaktstellen der Bandspulen und der Antriebsrolle über einen oder mehrere Magnetköpfe geführt.

Die Umfangsfläche 4 der Antriebsrolle 1 ist gemäß vorliegender Erfindung ballig ausgeführt. Die die Balligkeit beschreibende Kontur kann grundsätzlich ein beliebiger Kurvenbogen sein. Es hat sich jedoch als zweckmäßig erwiesen, eine kreisbogenförmige Wölbung zu verwenden. Bei einer Härte des elastischen Antriebsrollenbelags von ca. 65 Shore A und einer Andruckkraft von ca. 3 N gewährleistet ein Bogenradius zwischen 10 cm und 65 cm einen störungsfreien schnellen Richtungswechsel des Bandtransports.

Die ballige Umfangsfläche 4 ergibt eine elliptische Kontaktfläche 5 zwischen Bandspule und Antriebsrolle, die von der Anpreßkraft P durch Deformation der balligen Fläche gebildet wird. Sie ist kleiner als die rechteckige Kontaktfläche bei den bisher zylindrischen Umfangsflächen. Die Flächenpressung $P_e$ an der Kontaktstelle ist bei der balligen Umfangsfläche somit größer und ihr Verlauf in Richtung x der Rollenwelle 6 sowie in Richtung des Bandtransports steiler als die Flächenpressung $P_z$ der bekannten zylindrischen Antriebsrolle ohne Balligkeit.

Die an den Kontaktstellen übertragbaren Tangentialkräfte T, die sich mit dem Reibwert µ zu T = µ.p ergeben, sind folglich bei der balligen Fläche im Zentrum des Bandes größer als bei der geraden Zylinderfläche.

0018645

## Patentansprüche

1. Magnetbandlaufwerk nach dem Kontaktwickelprinzip, bestehend aus einem Rahmen, darin drehbar gehaltenen Bandspulen zum Abgeben und Aufnehmen eines Magnetbandes und einer im wesentlichen dazwischen drehbar angeordneten Antriebsrolle für den gleichzeitigen Antrieb beider Bandspulen durch Kontaktdruck zwischen den Umfängen der Antriebsrolle und den Bandspulen, wobei die Welle der Antriebsrolle ortsfest und die Wellen der Bandspulen in Richtung der Antriebsrolle bewegbar sind, weiterhin bestehend aus Einrichtungen, die an den Kontaktstellen für den Andruck der Bandspulen an die Antriebsrolle und für eine Bandspannung des Bandabschnitts zwischen den Kontaktstellen sorgen, dadurch gekennzeichnet, daß die Umfangsfläche (4) der Antriebsrolle (1) ballig ausgeführt ist.

2. Magnetbandlaufwerk nach Anspruch 1, dadurch gekennzeichnet, daß die Balligkeit der Umfangsfläche (4) kreisbogenförmig ist.

3. Magnetbandlaufwerk nach Anspruch 1 und 2, dadurch gekennzeichnet, daß der Radius des die Balligkeit erzeugenden Kreisbogens zwischen 10 cm und 65 cm liegt.

Zeichn.

**Europäisches Patentamt**

## EUROPÄISCHER RECHERCHENBERICHT

Nummer der Anmeldung

EP 80 10 2368

| Kategorie | Kennzeichnung des Dokuments mit Angabe, soweit erforderlich, der maßgeblichen Teile | betrifft Anspruch |
|---|---|---|
| | US - A - 3 645 432 (FRENCH)<br>* Spalte 1, Zeilen 62-75; Spalte 2, Zeilen 71,72; Spalte 4, Zeilen 6-11; Figuren * | 1,2 |
| | -- | |
| | DE - C - 844 680 (VOLLMER)<br>* Seite 2; Figur * | 1 |
| | -- | |
| | US - A - 4 072 280 (LEWIS)<br>* Spalte 3, Zeilen 32-46; Figuren * | 1 |
| | -- | |
| | US - A - 3 294 330 (WHITELEY)<br>* Spalte 2, Zeilen 42-50; Figuren * | 1 |
| | -- | |
| | US - A - 3 132 788 (JOHNSON)<br>* Spalte 2, Zeile 54 bis Spalte 3, Zeile 50; Figuren * | 1,2 |
| | -- | |
| | US - A - 4 146 194 (MAJICEK)<br>* Spalte 2, Zeile 38 bis Spalte 5, Zeile 36; Figuren * | 1 |
| | -- | |
| A | US - A - 3 552 681 (NEWELL) | 1 |
| A | US - A - 3 547 372 (BARNETT) | 1 |
| A | US - A - 3 460 781 (UBER) | 1 |
| A | US - A - 3 643 892 (VOGEL) | 1 |

----

Der vorliegende Recherchenbericht wurde für alle Patentansprüche erstellt.

### KLASSIFIKATION DER ANMELDUNG (Int Cl.³)

G 11 B 15/29

### RECHERCHIERTE SACHGEBIETE (Int Cl.³)

G 11 B 15/29
15/26
15/28
15/66

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| Recherchenort | Abschlußdatum der Recherche | Prüfer |
|---|---|---|
| Den Haag | 20-06-1980 | DECLAT |

EPA form 1503.1 06.78